# FASCICULE DE BREVET EUROPEEN

(11) **EP 3 156 271 B1**
(45) Date de publication et mention de la délivrance du brevet: **14.11.2018**
(21) Numéro de dépôt: 16188698.1
(22) Date de dépôt: 14.09.2016
(51) Int. Cl.: B60G 21/055

(54) **DISPOSITIF ANTI-DÉVERS À BRAS COUPLÉS PAR UN MANCHON TRANSLATABLE, POUR UN TRAIN DE VÉHICULE AUTOMOBILE**
STABILISATOR MIT ÜBER EINE VERSCHIEBBARE MANSCHETTE GEKOPPELTEN ARMEN FÜR EINE KRAFTFAHRZEUGACHSE
ANTI-ROLL DEVICE WITH ARMS COUPLED BY A TRANSLATABLE SLEEVE, FOR A MOTOR VEHICLE TRAIN

(30) Priorité: 16.10.2015 FR 1559866
(43) Date de publication de la demande: 19.04.2017
(73) Titulaire: PSA Automobiles SA, 78300 Poissy (FR)
(72) Inventeur: WASCHEUL, MICHAEL, 78260 ACHERES (FR); KANOUNNIKOFF, THOMAS, 92500 RUEIL MALMAISON (FR); GERARD, FABIEN, 91400 ORSAY (FR)

(56) Documents cités:
- EP-A2- 2 086 775
- DE-A1-102009 045 619
- DE-A1-102009 054 671
- JP-A- 2005 161 896
- JP-A- 2007 038 893
- US-B1- 6 428 019

## Description

L'invention concerne les barres anti-dévers (ou anti-roulis ou encore de stabilisation) qui équipent certains véhicules automobiles.

Comme le sait l'homme de l'art, une barre anti-dévers (ou anti-roulis ou encore de stabilisation) comprend généralement une pièce monobloc comportant deux bras se prolongeant mutuellement et couplés respectivement à des roues opposées (droite et gauche) d'un train d'un véhicule (automobile).

Cette barre anti-dévers est principalement sollicitée lorsque le véhicule roule dans un virage ou sur une voie de circulation qui est dégradée de façon dissymétrique par rapport à son axe longitudinal. Dans le premier cas (virage), elle est sollicitée en torsion et en flexion afin de maintenir autant que possible l'assiette du véhicule, et donc plus sa raideur est élevée plus son utilité est importante. Dans le second cas (dégradation), elle transmet partiellement l'irrégularité de la voie de circulation subie par l'une des roues d'un train à l'autre roue de ce même train par un phénomène de « renvoi de roulis », et donc plus sa raideur est élevée plus la dégradation de confort qu'elle induit est élevée.

En revanche, la barre anti-dévers n'est pas sollicitée lorsqu'elle tourne sur sa liaison pivot avec la structure du véhicule, comme par exemple en présence d'un ralentisseur (ou « dos d'âne »). Dans ce cas, seules les suspensions sont sollicitées.

Afin d'améliorer le confort des passagers, il a été proposé d'utiliser une barre anti-dévers ayant des bras qui ne sont pas solidarisés fixement l'un à l'autre, et donc qui ne constituent pas une pièce monobloc, mais pouvant cependant être couplés l'un à l'autre lorsque cela s'avère nécessaire grâce à des moyens de couplage agissant sur leurs extrémités voisines. De telles barres anti-dévers sont par exemple décrites dans les documents brevet US 6,428,019, EP 2086775 et DE 10 2009 054671. Cependant, ces barres anti-dévers comprennent des moyens de couplage relativement onéreux et/ou complexes et/ou encombrants et/ou consomment une quantité d'énergie électrique importante.

L'invention a donc notamment pour but d'améliorer la situation.

Elle propose notamment à cet effet un dispositif anti-dévers, destiné à équiper un train de véhicule automobile ayant des roues opposées (droite et gauche), et comprenant des premier et second bras comportant chacun une première extrémité propre à être couplée à l'une des roues et une seconde extrémité couplée à des moyens de couplage.

Ce dispositif anti-dévers se caractérise par le fait que ses moyens de couplage comprennent :
- un moyeu couplé en rotation à la seconde extrémité du premier bras,
- un manchon monté à rotation autour du moyeu et comprenant, d'une part, une partie avant munie d'un premier cône de friction de type femelle et propre, en cas de translation par rapport au moyeu, à se coupler à un second cône de friction, de type mâle et couplé en rotation à la seconde extrémité du second bras, et, d'autre part, une partie arrière munie d'au moins une première rampe, et
- un élément couplé en rotation à la seconde extrémité du premier bras et comportant au moins une seconde rampe coopérant avec une première rampe associée pour coupler en rotation le manchon au premier bras et induire une translation additionnelle du manchon, vers le second bras, propre à serrer le couplage des premier et second cônes de friction, et ainsi permettre un couplage en rotation des premier et second bras.

On définit ainsi un dispositif anti-dévers dont les deux bras peuvent être couplés/découplés grâce à des moyens de couplage comprenant peu d'éléments et peu complexes, afin que la contrainte subie par la roue à laquelle est couplé l'un d'entre eux ne soit pas également subie par l'autre roue à laquelle est couplé l'autre bras.

Le dispositif anti-dévers selon l'invention peut comporter d'autres caractéristiques qui peuvent être prises séparément ou en combinaison, et notamment :
- le manchon peut comprendre une gorge. Dans ce cas, ses moyens de couplage comprennent également un actionneur comportant une fourchette logée partiellement dans cette gorge, et propre à translater cette fourchette pour provoquer la translation du manchon ;
- l'élément peut être solidarisé fixement au premier bras ;
- le manchon et l'élément peuvent comprendre respectivement au moins deux premières rampes et au moins deux secondes rampes ;
- les première(s) et seconde(s) rampes peuvent présenter un angle d'inclinaison, par rapport à un plan perpendiculaire à un axe d'alignement des secondes extrémités, qui est compris entre 4° et 85° ;
- les premier et second cônes de friction peuvent présenter un angle d'inclinaison, par rapport à un axe d'alignement des secondes extrémités, qui est compris entre 5° et 8° ;
- son moyeu peut être solidarisé fixement à la seconde extrémité du premier bras par emmanchement en force.

L'invention propose également un véhicule, éventuellement de type automobile, et comprenant au moins un train comportant des roues opposées (droite et gauche) couplées via un dispositif anti-dévers du type de celui présenté ci-avant.

D'autres caractéristiques et avantages de l'invention apparaîtront à l'examen de la description détaillée ci-après, et des dessins annexés (obtenus en CAO/DAO (« Conception Assistée par Ordinateur/Dessin Assisté par Ordinateur »), d'où le caractère apparemment discontinu de certaines lignes), sur lesquels :
- la figure 1 illustre schématiquement, dans une vue en perspective, un exemple de réalisation d'un dispositif anti-dévers selon l'invention, avant son couplage à un train d'un véhicule automobile,
- la figure 2 illustre schématiquement, dans une vue en perspective, les principaux éléments d'un exemple de réalisation d'un dispositif anti-dévers selon l'invention, avant assemblage,
- la figure 3 illustre schématiquement, dans une vue en coupe longitudinale, le dispositif anti-dévers de la figure 2 une fois ses éléments assemblés,
- la figure 4 illustre schématiquement, dans une vue en perspective, une partie d'un premier bras équipée d'un disque de couplage propre à coopérer avec le manchon des figures 2 et 3,
- la figure 5 illustre schématiquement, dans une vue en perspective, le manchon des figures 2 et 3, propre à coopérer avec le disque de couplage de la figure 4,
- la figure 6 illustre schématiquement, dans une vue en coupe longitudinale, le manchon de la figure 5,
- la figure 7 illustre schématiquement, dans une vue en coupe longitudinale, l'état du dispositif anti-dévers de la figure 3 lorsque ses premier et second bras sont découplés, et
- la figure 8 illustre schématiquement, dans une vue en coupe longitudinale, l'état du dispositif anti-dévers de la figure 3 lorsque ses premier et second bras sont couplés en rotation.

L'invention a notamment pour but de proposer un dispositif anti-dévers (ou anti-roulis ou encore de stabilisation) DA destiné à équiper un train d'un véhicule automobile.

Dans ce qui suit, on considère, à titre d'exemple non limitatif, que le véhicule automobile est une voiture. Mais l'invention n'est pas limitée à ce type de véhicule automobile. Elle concerne en effet tout type de véhicule automobile comprenant au moins un train devant être équipé d'un dispositif anti-dévers.

Par ailleurs, on considère dans ce qui suit, à titre d'exemple non limitatif, que le train est destiné à être installé dans une partie avant d'un véhicule automobile. Mais l'invention concerne également les trains arrière de véhicule automobile.

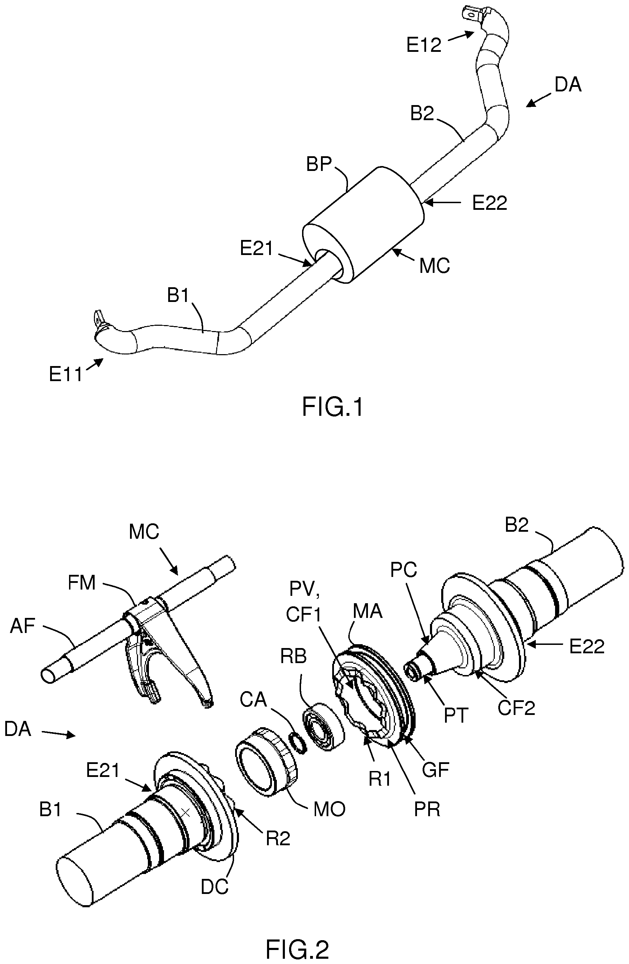

On a schématiquement représenté sur la figure 1 un exemple de réalisation d'un dispositif anti-dévers DA selon l'invention, destiné à équiper un train d'un véhicule automobile (ici une voiture).

Comme illustré, un dispositif anti-dévers DA, selon l'invention, comprend au moins deux bras Bj (j = 1 ou 2) et des moyens de couplage MC.

Ces deux bras Bj (gauche (j = 1) et droit (j =2)) sont indépendants l'un de l'autre, et comprennent chacun des première E1j et seconde E2j extrémités. La première extrémité E1j est propre à être couplée à l'une des roues opposées d'un train. Par exemple, chaque première extrémité E1j de bras Bj peut être solidarisée à une biellette qui est reliée à une roue. Cette solidarisation peut se faire par une liaison rotule ou pivot avec la biellette concernée, par exemple. Les secondes extrémités E2j sont couplées aux moyens de couplage MC afin de pouvoir être couplées en rotation ou découplées l'une de l'autre en fonction des besoins.

Ce couplage en rotation ou ce découplage est réalisé par les moyens de couplage MC consécutivement à la réception d'une commande. Cette commande peut, par exemple, être fonction d'irrégularités détectées sous le véhicule par un capteur de paramètre physique (tel qu'un accéléromètre) et/ou d'une fin de virage détectée devant le véhicule par des moyens d'observation ou par un système de guidage par satellites et/ou de la vitesse en cours du véhicule. Par ailleurs, cette commande peut être fournie par un module de commande faisant éventuellement partie du dispositif anti-dévers DA. Par exemple, un tel module de commande peut être un organe de commande destiné à être contrôlé par le conducteur du véhicule et permettant soit d'autoriser le fonctionnement des moyens de couplage MC, soit d'interdire le fonctionnement des moyens de couplage MC. Ce type de module de commande peut comprendre un organe de commande (par exemple un bouton, éventuellement rotatif) installé dans la planche de bord du véhicule ou dans une console située à proximité du conducteur du véhicule, ou bien peut être un circuit électronique piloté par une option contrôlable via un écran d'affichage installé dans la planche de bord du véhicule ou dans une console située à proximité du conducteur du véhicule. En variante, le module de commande peut faire partie d'un calculateur du véhicule et être chargé de déterminer en temps réel et de façon dynamique, chaque commande.

Comme cela est illustré sur la figure 1, les moyens de couplage MC peuvent être au moins en partie logés dans un boîtier (ou capot) de protection BP.

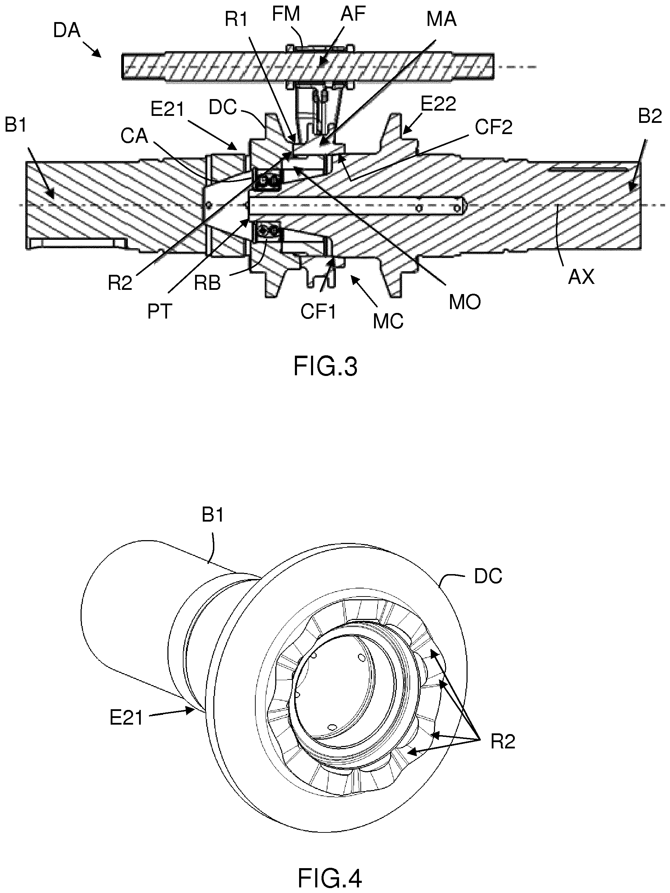

Comme cela est illustré sur les figures 2 et 3, les moyens de couplage MC comprennent au moins un moyeu MO, un manchon MA, des premier CF1 et second CF2 cônes de friction, un élément DC, et des première(s) R1 et seconde(s) R2 rampes.

Le moyeu MO est couplé en rotation à la seconde extrémité E21 du premier bras B1. Dans l'exemple non limitatif illustré sur la figure 3, ce moyeu MO est solidarisé fixement à l'élément DC. Cette solidarisation peut se faire, par exemple, par emmanchement en force dans un logement prévu à cet effet dans une partie avant de l'élément DC. Mais elle pourrait également se faire par soudage, par exemple. Par ailleurs, le moyeu MO pourrait être couplé en rotation à une partie terminale de la seconde extrémité E21 du premier bras B1, ou bien il pourrait faire partie intégrante de cette seconde extrémité E21.

L'élément DC est couplé en rotation à la seconde extrémité E21 du premier bras B1. On notera que dans l'exemple non limitatif illustré sur les figures 2 à 4, l'élément DC est un disque de couplage qui est directement usiné dans la seconde extrémité E21 du premier bras B1. Mais il pourrait s'agir d'une pièce rapportée solidarisée fixement à la seconde extrémité E21 du premier bras B1, par exemple par soudage ou emmanchement en force.

Le manchon MA est monté à rotation autour du moyeu MO et comprend une partie avant PV (orientée vers le second bras B2) et une partie arrière PR (orientée vers le premier bras B1). Par ailleurs, ce manchon MA est propre à être translaté par rapport au moyeu MO, suivant une direction longitudinale qui est parallèle à l'axe AX d'alignement des secondes extrémités E2j, pour coupler en rotation ces dernières (E2j) et donc les bras Bj, comme on le comprendra plus loin.

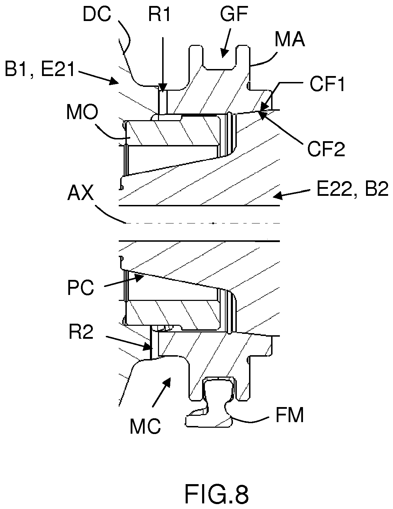

Afin de permettre ses translations, le manchon MA peut, comme illustré non limitativement sur les figures 2, 3 et 5 à 8, comprendre une gorge GF logeant partiellement une fourchette FM que comprend un actionneur faisant partie des moyens de couplage MC. Cet actionneur est propre à translater la fourchette FM pour provoquer la translation du manchon MA. Il peut comprendre à cet effet un axe de commande AF, auquel est solidarisée fixement la fourchette FM, et qui est translatable suivant la direction longitudinale par un mécanisme (non illustré et faisant partie des moyens de couplage MC) en fonction d'une commande reçue. Ce mécanisme peut fonctionner au moyen de tout type d'énergie, et notamment au moyen d'énergie électrique, de gaz ou d'un liquide. A titre d'exemple non limitatif, l'axe de commande AF peut être translaté par un petit moteur électrique, éventuellement logé dans le boîtier de protection BP.

On notera que le moyeu MO ne sert ici qu'à supporter le manchon MA et à permettre sa translation suivant la direction longitudinale. Il n'a en effet pas pour objectif de l'entraîner en rotation.

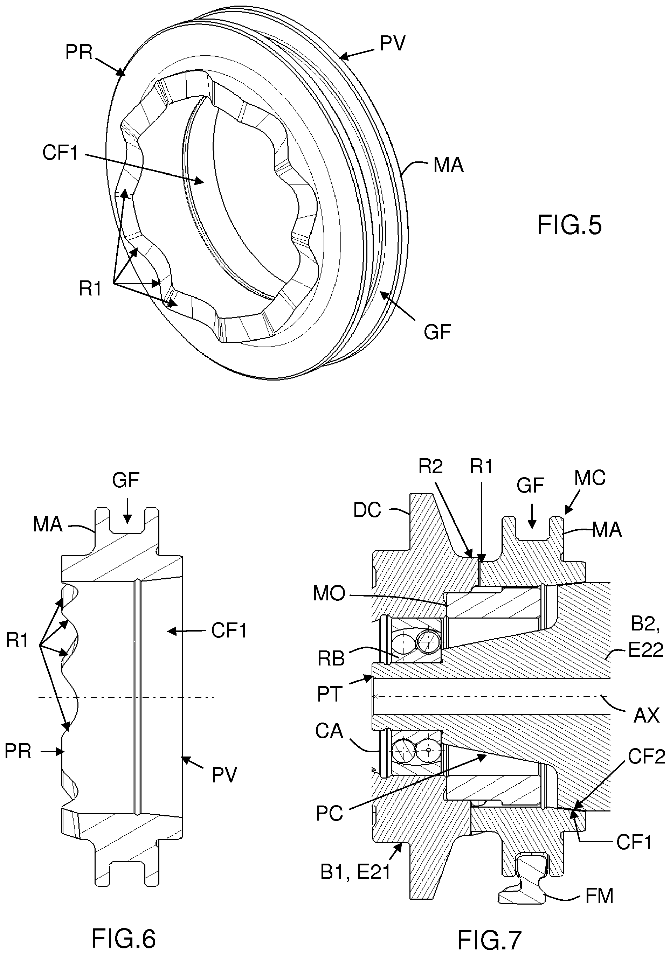

Comme illustré sur les figures 5 à 8, la partie avant PV du manchon MA est munie du premier cône de friction CF1. Ce dernier (CF1) est de type femelle et propre, en cas de translation du manchon MA (ici par la fourchette FM et vers la droite), à se coupler au second cône de friction CF2, de type mâle et couplé en rotation à la seconde extrémité E22 du second bras B2. On comprendra que ce couplage se fait par friction entre les surfaces des premier CF1 et second CF2 cônes de friction.

On notera que dans la phase de découplage des secondes extrémités E2j (illustrée sur la figure 7), les premier CF1 et second CF2 cônes de friction ne sont pas au contact l'un de l'autre et donc ne coopèrent pas l'un avec l'autre. Leurs surfaces respectives de friction sont cependant très proches l'une de l'autre, et donc une très petite translation du manchon MA (et donc du premier cône de friction CF1) vers la seconde extrémité E22 du second bras B2 suffit à les coupler par friction.

Par exemple, les premier CF1 et second CF2 cônes de friction peuvent présenter un angle d'inclinaison par rapport à l'axe d'alignement AX qui est compris entre 5° et 8°.

Comme illustré sur les figures 5 et 6, la partie arrière PR du manchon MA est munie d'au moins une première rampe R1.

L'élément DC (ici un disque de couplage couplé en rotation à la seconde extrémité E21 du premier bras B1) comporte au moins une seconde rampe R2 coopérant avec une première rampe R1 associée du manchon MA. Cette coopération est destinée à coupler en rotation le manchon MA au second bras B2 et à induire une translation additionnelle du manchon MA, vers le second bras B2, qui est propre à serrer (ou verrouiller) le couplage des premier CF1 et second CF2 cônes de friction, et permet ainsi un couplage en rotation des premier B1 et second B2 bras.

La translation du manchon MA induit un dévirage (après la phase de couplage des premier CF1 et second CF2 cônes de friction), ce qui provoque un appui d'au moins une première rampe R1 sur au moins une seconde rampe R2 associée. Cet appui provoque alors un écartement (ou translation additionnelle (ici vers la droite)) du manchon MA par rapport à l'élément DC et donc un serrage (ou verrouillage) du premier cône de friction CF1 sur le second cône de friction CF2.

Pour ce faire, la hauteur (ou profondeur) des rampes R1 et R2 suivant la direction longitudinale est de préférence strictement supérieure à la somme de l'amplitude de la translation du manchon MA pendant la phase de couplage des premier CF1 et second CF2 cônes de friction et de l'amplitude de la translation additionnelle du manchon MA pendant la phase de serrage (ou verrouillage). Cette contrainte optionnelle est destinée à imposer que le manchon MA demeure en permanence en prise avec la seconde extrémité E21 du premier bras B1, via les rampes R1 et R2.

Dans la phase de découplage des secondes extrémités E2j (illustrée sur la figure 7), les première(s) R1 et seconde(s) R2 rampes associées se contactent sensiblement, et par conséquent le manchon MA est entraîné en rotation par l'élément DC, du fait qu'il est bloqué en translation par la fourchette FM. Mais cela n'induit pas d'entraînement du second bras B2 du fait que le manchon MA est à ce moment découplé de ce dernier (B2).

Afin d'optimiser le couplage de serrage, il est avantageux, comme illustré sur les figures 2 et 4 à 6, que le manchon MA et l'élément DC comprennent respectivement au moins deux premières R1 et secondes R2 rampes, et plus préférentiellement au moins trois ou quatre.

Par exemple, et comme illustré sur les figures 2, 5 et 6, les premières R1 et secondes R2 rampes peuvent être définies par des ondulations en forme générale de V arrondi et séparées entre elles par des plateaux linéaires. Chaque ondulation définie alors deux surfaces opposées et ayant des inclinaisons sensiblement identiques bien qu'opposées en valeur. Les surfaces inclinées et opposées ainsi définies par les ondulations permettent avantageusement de réaliser un auto-serrage et une transmission de couple dans les deux sens de rotation possibles des secondes extrémités E2j des bras Bj. Ces surfaces inclinées et opposées définissent ce que l'homme de l'art appelle généralement des cotes tirage et retro.

Egalement par exemple, les première(s) R1 et seconde(s) R2 rampes peuvent présenter un angle d'inclinaison, par rapport à un plan perpendiculaire à l'axe d'alignement AX, qui est compris entre 5° et 85°.

Lorsque l'on veut découpler les secondes extrémités E2j après une phase de couplage en rotation, on doit actionner l'axe de commande AF afin de translater la fourchette FM (ici vers la gauche). Cela provoque en effet un découplage du premier cône de friction CF1 (du manchon MA) du second cône de friction CF2 (du second bras B2). Ce découplage s'effectue de préférence en position véhicule à plat afin de ne pas avoir besoin d'utiliser une grosse énergie de découplage. Cette position « à plat » permet en effet de ne pas avoir à subir les remontées de couple des roues au travers des moyens de couplage MC, lesquelles sont engendrées par les imperfections de la voie de circulation empruntée. De plus, être en position « fermée » est une condition principale de « tenue sous couple », afin de ne pas « lâcher » le couple tant que celui-ci est fourni aux moyens de couplage MC. Par conséquent, les moyens de couplage MC fonctionnent en tirage et retro, et l'assistance des rampes R1 et R2 ne se fait que dans la phase de couplage.

On notera que la seconde extrémité E2j d'un bras Bj peut faire partie intégrante de ce bras Bj (dans le cas d'une réalisation monobloc) ou bien peut être une pièce rapportée qui est solidarisée fixement, par exemple par soudage ou vissage.

On notera également que dans l'exemple non limitatif illustré sur la figure 3, le moyeu MO (en prise avec le premier bras B1 (par exemple par emmanchement ou soudage)) comprend une partie creuse permettant le passage et le montage par emmanchement de celui-ci sur la seconde extrémité E21 du premier bras B1, d'un roulement à billes RB et un clip d'arrêt CA destiné à bloquer axialement le roulement à billes RB suivant l'axe d'alignement AX. Ce roulement à billes RB et ce clip d'arrêt CA sont, ici, montés à rotation sur une partie terminale PT de la seconde extrémité E22 du second bras B2, qui est précédée par une partie conique PC destinée à faciliter la lubrification.

L'invention offre un dispositif anti-dévers dont les bras peuvent être avantageusement découplés pour faire varier sa raideur, grâce à des moyens de couplage peu encombrants, peu complexes sur le plan mécanique, et peu (voire très peu) consommateurs d'énergie. De plus, ces moyens de couplage permettent un couplage/découplage très rapide permettant une réaction rapide du comportement du véhicule par exemple en attaque de virage et/ou au-delà d'une certaine vitesse, pour respecter des paramètres fonctionnels de sécurité de fonctionnement tels que la tenue de cap ou la réponse immédiate à un coup de volant. Il en résulte donc une amélioration des performances et des prestations de confort du véhicule. Par ailleurs, la raideur pouvant être contrôlée, on peut réduire notablement le nombre de dispositifs anti-dévers différents pour une même plate-forme véhicules, ce qui permet une réduction des couts de fabrication des véhicules.

## Revendications

1. Dispositif anti-dévers (DA) pour un train d'un véhicule automobile ayant des roues opposées, ledit dispositif (DA) comprenant des premier (B1) et second (B2) bras comportant chacun une première extrémité (E1j) propre à être couplée à l'une desdites roues et une seconde extrémité (E2j) couplée à des moyens de couplage (MC), **caractérisé en ce que** lesdits moyens de couplage (MC) comprennent i) un moyeu (MO) couplé en rotation à la seconde extrémité (E21) dudit premier bras (B1), ii) un manchon (MA) monté à rotation autour dudit moyeu (MO) et comprenant une partie avant (PV) munie d'un premier cône de friction (CF1) de type femelle et propre, en cas de translation par rapport audit moyeu (MO), à se coupler à un second cône de friction (CF2), de type mâle et couplé en rotation à la seconde extrémité (E22) dudit second bras (B2), et une partie arrière (PR) munie d'au moins une première rampe (R1), et iii) un élément (DC) couplé en rotation à la seconde extrémité (E21) dudit premier bras (B1) et comportant au moins une seconde rampe (R2) coopérant avec une première rampe (R1) associée pour coupler en rotation ledit manchon (MA) audit premier bras (B1) et induire une translation additionnelle dudit manchon (MA), vers ledit second bras (B2), propre à serrer ledit couplage desdits premier (CF1) et second (CF2) cônes de friction, et ainsi permettre un couplage en rotation desdits premier (B1) et second (B2) bras.

2. Dispositif selon la revendication 1, **caractérisé en ce que** ledit manchon (MA) comprend une gorge (GF), et **en ce que** lesdits moyens de couplage (MC) comprennent en outre un actionneur (AF) comportant une fourchette (FM) logée partiellement dans ladite gorge (GF), et propre à translater ladite fourchette (FM) pour provoquer ladite translation du manchon (MA).

3. Dispositif selon l'une des revendications 1 et 2, **caractérisé en ce que** ledit élément (DC) est solidarisé fixement audit premier bras (B1).

4. Dispositif selon l'une des revendications 1 à 3, **caractérisé en ce que** lesdits manchon (MA) et élément (DC) comprennent respectivement au moins deux premières (R1) et secondes (R2) rampes.

5. Dispositif selon l'une des revendications 1 à 4, **caractérisé en ce que** lesdites première(s) (R1) et seconde(s) (R2) rampes présentent un angle d'inclinaison par rapport à un plan perpendiculaire à un axe d'alignement desdites secondes extrémités (E2j) compris entre 4° et 85°.

6. Dispositif selon l'une des revendications 1 à 5, **caractérisé en ce que** lesdits premier (CF1) et second (CF2) cônes de friction présentent un angle d'inclinaison par rapport à un axe d'alignement desdites secondes extrémités (E2j) compris entre 5° et 8°.

7. Dispositif selon l'une des revendications 1 à 6, **caractérisé en ce que** ledit moyeu (MO) est solidarisé fixement à ladite seconde extrémité (E21) du premier bras (B1) par emmanchement en force.

8. Véhicule comprenant au moins un train comportant des roues opposées, **caractérisé en ce qu'**il comprend en outre au moins un dispositif anti-dévers (DA) selon l'une des revendications précédentes, et couplé auxdites roues opposées de ce train.

9. Véhicule selon la revendication 8, **caractérisé en ce qu'**il est de type automobile.

## Patentansprüche

1. Stabilisator (DA) für ein Fahrgestell eines Kraftfahrzeugs, das einander gegenüberliegende Räder hat, wobei der Stabilisator (DA) einen ersten (B1) und einen zweiten (B2) Arm umfasst, die jeweils ein erstes Ende (E1j) umfassen, das geeignet ist, mit einem der Räder gekoppelt zu sein, und ein zweites Ende (E2j), das mit Kopplungsmitteln (MC) gekoppelt ist, **dadurch gekennzeichnet, dass** die Kopplungsmittel (MC) i) eine Nabe (MO) umfassen, die in Drehung mit dem zweiten Ende (E21) des ersten Arms (B1) gekoppelt ist, ii) eine Manschette (MA), die in Drehung um die Nabe (MO) gekoppelt ist und einen Vorderteil (PV) umfasst, der mit einem ersten Reibkegel (CF1) des Buchsentyps versehen und geeignet ist, sich im Fall einer Verschiebung in Bezug auf die Nabe (MO) an einen zweiten Reibkegel (CF2) des Steckertyps zu koppeln, und in der Drehung mit dem zweiten Ende (E22) des zweiten Arms (B2) gekoppelt ist, und einen hinteren Teil (PR), der mit mindestens einer Rampe (R1) versehen ist, und iii) ein Element (DC), das in Drehung mit dem zweiten Ende (E21) des ersten Arms (B1) gekoppelt ist und mindestens eine zweite Rampe (R2) umfasst, die mit einer assoziierten ersten Rampe (R1) zusammenwirkt, um die Manschette (MA) mit dem ersten Arm (B1) zu koppeln und eine zusätzliche Verschiebung der Manschette (MA) zu dem zweiten Arm (B2) zu induzieren, die geeignet ist, um das Koppeln des ersten (CF1) und des zweiten (CF2) Reibkegels zu spannen und daher ein Koppeln in Drehung des ersten (B1) und des zweiten (B2) Arms zu erlauben.

2. Stabilisator nach Anspruch 1, **dadurch gekennzeichnet, dass** die Manschette (MA) eine Nut (GF) umfasst, und dass die Kopplungsmittel (MC) außerdem einen Aktuator (AF) umfassen, der eine Gabel (FM) umfasst, die teilweise in der Nut (GF) aufgenommen und geeignet ist, die Gabel (FM) zu verschieben, um die Verschiebung der Manschette (MA) zu bewirken.

3. Stabilisator nach einem der Ansprüche 1 und 2, **dadurch gekennzeichnet, dass** das Element (DC) fest mit dem ersten Arm (B1) verbunden ist.

4. Stabilisator nach einem der Ansprüche 1 bis 3, **dadurch gekennzeichnet, dass** die Manschette (MA) und das Element (DC) jeweils mindestens zwei erste (R1) und zwei zweite (R2) Rampen umfassen.

5. Stabilisator nach einem der Ansprüche 1 bis 4, **dadurch gekennzeichnet, dass** die erste(n) Rampe(n) (R1) und die zweite(n) Rampe(n) (R2) einen Neigungswinkel in Bezug auf eine Ebene senkrecht zu einer Ausrichtungsachse der zweiten Enden (E2j) aufweisen, der zwischen 4° und 85° liegt.

6. Vorrichtung nach einem der Ansprüche 1 bis 5, **dadurch gekennzeichnet, dass** der erste (CF1) und der zweite (CF2) Reibkegel einen Neigungswinkel in Bezug zu einer Ausrichtungsachse der zweiten Enden (E2j) aufweisen, der zwischen 5° und 8° liegt.

7. Vorrichtung nach einem der Ansprüche 1 bis 6, **dadurch gekennzeichnet, dass** die Nabe (MO) fest mit dem zweiten Ende (E21) des ersten Arms (B1) durch Aufschrumpfen unter Kraft verbunden ist.

8. Fahrzeug, das mindestens ein Fahrgestell umfasst, das einander gegenüberliegende Räder umfasst, **dadurch gekennzeichnet, dass** es außerdem mindestens einen Stabilisator (DA) nach einem der vorhergehenden Ansprüche umfasst, der mit den einander gegenüberliegenden Rädern dieses Fahrgestells gekoppelt ist.

9. Fahrzeug nach Anspruch 8, **dadurch gekennzeichnet, dass** es vom Typ Automobil ist.

## Claims

1. An anti-roll device (DA) for a motor vehicle train having opposite wheels, said device (DA) including first (B1) and second (B2) arms each comprising a first end (E1j) suitable to be coupled to one of said wheels, and a second end (E2j) coupled to coupling means (MC), **characterized in that** said coupling means (MC) include i) a hub (MO) coupled in rotation to the second end (E21) of said first arm (B1), ii) a sleeve (MA) rotatably mounted about said hub (MO) and including a front part (PV) provided with a first friction cone (CF1) of the female type and suitable, in the event of translation with respect to said hub (MO), of coupling itself to a second friction cone (CF2), of the male type and coupled in rotation to the second end (E22) of said second arm (B2), and a rear part (PR) provided with at least a first ramp (R1), and iii) an element (DC) coupled in rotation to the second end (E21) of said first arm (B1) and comprising at least a second ramp (R2) cooperating with an associated first ramp (R1) for coupling in rotation said sleeve (MA) to said first arm (B1) and to induce an additional translation of said sleeve (MA), towards said second arm (B2), suitable to tighten said coupling of said first (CF1) and second (CF2) friction cones, and to thus permit a coupling in rotation of said first (B1) and second (B2) arms.

2. The device according to Claim 1, **characterized in that** said sleeve (MA) includes a groove (GF), and **in that** said coupling means (MC) further include an actuator (AF) comprising a fork (FM) housed partially in said groove (GF), and suitable to translate said fork (FM) to cause said translation of the sleeve (MA).

3. The device according to one of Claims 1 and 2, **characterized in that** said element (DC) is fixedly secured to said first arm (B1).

4. The device according to one of Claims 1 to 3, **characterized in that** said sleeve (MA) and element (DC) include respectively at least two first (R1) and second (R2) ramps.

5. The device according to one of Claims 1 to 4, **characterized in that** said first (R1) and second (R2) ramps present an angle of inclination with respect to a plane perpendicular to an alignment axis of said second ends (E2) comprised between 4° and 85°.

6. The device according to one of Claims 1 to 5, **characterized in that** said first (CF1) and second (CF2) friction cones present an angle of inclination with respect to an alignment axis of said second ends (E2) comprised between 5° and 8°.

7. The device according to one of Claims 1 to 6, **characterized in that** said hub (MO) is fixedly secured to said second end (E21) of the first arm (B1) by force fitting.

8. A vehicle including at least one train comprising opposite wheels, **characterized in that** it further includes at least one anti-roll device (DA) according to one of the preceding claims, and coupled to said opposite wheels of this train.

9. The vehicle according to Claim 8, **characterized in that** it is of the automobile type.
